# EUROPEAN PATENT APPLICATION

(11) **EP 3 828 669 A1**
(43) Date of publication of application: **02.06.2021**
(21) Application number: 20211576.2
(22) Date of filing: 26.11.2020
(51) Int. Cl.: G06F 1/3209, G06F 1/3234, H04L 12/24, H04W 4/38

(54) **COMMUNICATION BETWEEN CLIENT DEVICE AND SERVER**

(30) Priority: 27.11.2019 GB 201917255
(71) Applicant: ARM Limited, Cambridgeshire CB1 9NJ (GB)
(72) Inventor: PILKIVI, Lauri, Ollinpoika, Cambridge, Cambridgeshire CB1 9NJ (GB)
(74) Representative: Dentons UK and Middle East LLP

(57) **Abstract**

A method of communication between at least one client device and a server for reporting of data from the client device to the server, comprises implementing one of a plurality of different communication policies for at least two different ones of objects, object instances or resources at the client device. The plurality of communication policies includes a dependent communication policy according to which data relating to at least one of the objects, object instances or resources is reported from the client device to the server only if other data is to be reported from the client device to the server.

## Description

This disclosure relates generally to methods of communication between a client device and a server, for example but not limited to a server and client operating according to the Open Mobile Alliance (OMA) Lightweight Machine to Machine (LwM2M) protocol.

LwM2M is a device management protocol designed for sensor networks operating in an M2M environment such as but not limited to the Internet of Things (loT). References in this disclosure to operation according to the LwM2M protocol are to be taken to mean compliant with standard OMA-ETS-LightweightM2M-V1.0 or any subsequent versions, for example:
OMA. LwM2M Technical Specification, Approved Version 1.0.2. Feb 2018. URL: http://www.openmobilealliance.org/release/LightweightM2M/V1 0 2-20180209-A/.
OMA SpecWorks. Lightweight Machine to Machine Technical Specification: Core, Approved Version 1.1. July 2018. URL: http://www.openmobilealliance.org/release/LightweightM2M/V1 1-20180710-A/.
OMA SpecWorks. Lightweight Machine to Machine Technical Specification: Transport Bindings, Approved Version 1.1. July 2018. URL: http://www.openmobilealliance.org/release/LightweightM2M/V1 1-20180710-A/.

The Internet of Things encompasses devices and networks that are internet protocol (IP)-enabled and Internet-connected, along with the Internet services monitoring and controlling those devices. Such IP-enabled devices connected to the internet may be termed data processing devices, end nodes, remote devices or Internet of Things (loT) devices and include sensors, machines, active positioning tags, radio-frequency identification (RFID) readers and building automation equipment to name but a few. Data exchange between programs, computers and M2M devices is a vital element of the loT and different programs, computers and processors are used in different environments.

The Wireless Embedded Internet is a subset of the loT and is generally represented by resource-limited embedded devices, often battery powered and connected by low-power, low-bandwidth wireless networks to the Internet.

This disclosure is not limited to communication with loT devices or devices operating according to Internet Protocol (IP) and may be applied to non-IP devices and communication.

An example of a network technology where Machine-to-Machine (M2M) communication is widely applied is a low-power wireless network, such as an IEEE 802.15.4 based embedded and sensor network. More recently, as M2M devices have become IP enabled, systems have become more open by using IP as a networking protocol. The sensors in a network are examples of objects in a communication system capable of reporting the values of resources such as temperature as described further herein. A server may initiate an observation request for changes of a specific resource. A client may then reply with a series of notifications, for example relating to temperature changes according to the observation request.

Following the introduction of IEEE 802.15.4 other standards were developed to standardize an IP adaption for such wireless embedded links. For example, the IPv6 over Low Power Wireless Standard (6LoWPAN) is a set of standards which enable the efficient use of IPv6 over low-power, low-rate wireless networks on simple embedded devices through an adaption layer and the optimization of related protocols.

The Open Mobile Alliance LwM2M is a standard applicable to 6LoWPAN and is focussed on constrained cellular and M2M devices. A Lightweight Machine-to-Machine (LWM2M) Bootstrap process is used to provide mandatory information through the Bootstrap Interface for remote devices so that they can perform registration with one or more servers. Registration assigns a remote device to a cloud based server to access applications across a domain.

A domain may be a logical grouping of devices and when the domain is exported to Domain Name System (DNS), then the domain value normally equates to the DNS domain name.

With the proliferation of loT devices, it is desirable to manage such devices to ensure that they do not consume network resources unnecessarily. Some of the methods and apparatus described here are intended to reduce the number of messages, e.g. notifications, transmitted by clients. Not all of the methods and apparatus, e.g. computing systems and devices, described here are directed to this aim.

In one aspect there is disclosed here a method of communication between at least one client device and a server for reporting of data from the client device to the server, the method comprising implementing one of a plurality of different communication policies for at least two different ones of objects, object instances or resources at the client device, wherein the plurality of communication policies includes a dependent communication policy according to which data relating to at least one of the objects, object instances or resources is reported from the client device to the server only if other data is to be reported from the client device to the server.

There is also provided a client device configured to implement any of the methods disclosed here. There is also provided a computer readable medium comprising instructions which, when implemented in a processor in a client device or a server, cause the client device or server to implement any of the methods disclosed here.

Some embodiments of the methods and apparatus described here may operate according to the Lightweight Machine to Machine (LwM2M) protocol. The protocol defines "attributes" which may be attached to an object, an object instance or a resource. For example, in From: OMA-TS-LightweightM2M_Core-V1_1-20180710-A:

"Attributes are metadata which can be attached to an Object, an Object Instance, or a Resource. The value of an Attribute is LwM2M Server specific. These attributes can fulfil various roles, from carrying information only (e.g. Discover) to carrying parameters for setting up certain actions on the LwM2M Client (e.g. Notifications)."

"Attributes attached to Objects, Object Instances, Resources are respectively named O-Attribute, Ol-Attribute, R-Attribute."

"These Attributes MAY be carried in the message payload of Registration and Discover operations; they also MAY be updated - when writable - through the "Write-Attributes" operation."

The communication policies described here may be implemented according to the LwM2M protocol, in which case the communication policies may be implemented as a new attribute. For example a new class of attributes may be defined called "policy" attributes. It will be appreciated that some other term may be used instead of "policy".

Some embodiments of methods and apparatus disclosed here will now be described by way of example only and with reference to the accompanying drawings in which:
Figure 1 is a schematic diagram of a LWM2M deployment scenario;
Figure 2 is a schematic diagram of a LWM2M architecture with Server and Client;
Figure 3 is a schematic diagram of a LWM2M object model;
Figure 4 is a flowchart illustrating an embodiment of a method as described in this disclosure;
Figure 5A is a flowchart illustrating an embodiment of a method as described in this disclosure;
Figure 5B is a flowchart illustrating an embodiment of a method as described in this disclosure;
Figure 6 is a flowchart illustrating an embodiment of a method as described in this disclosure;
Figure 7 is a block diagram showing a logical model of an algorithm which may be used to implement an embodiment of a method as described in this disclosure.

The embodiments utilize the LwM2M protocol as an example but the methods and apparatus described herein are not limited to LwM2M.

References in this document to a "client device" may be taken to indicate an application being implemented at a client device. Similarly references in this document to a "server" may be taken to indicate an application being implemented at the server.

Some terms used herein are defined in the Open Mobile Alliance LwM2M standard, such as "object" and "resource". These terms are not necessarily limited to their definition in the standard and may be taken to have their usual meaning. They may be taken to have their precise meaning as defined in the Open Mobile Alliance LwM2M standard according to some embodiments.

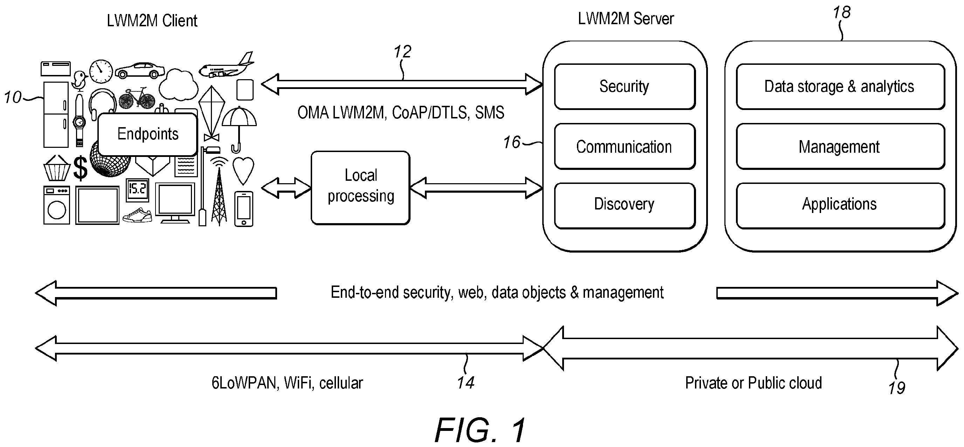

Figure 1 shows a deployment scenario for an M2M remote device 10 across a range of market segments from streetlights and electric meters to home and building automation. The remote devices 10 may interface 12 with a LwM2M server 16 based on open Internet Engineering Task Force (IETF) standards such as Constrained Application Protocol (CoAP) over a low-power wireless network. One such low-power wireless network is an IEEE 802.15.4 based embedded and sensor network using IPv6 over Low Power Wireless Standard (6LoWPAN) 14. The LwM2M server 16 can interface with the wider world-wide web network 18 enabling deployment of M2M applications from a private server, private cloud or public cloud environment 19.

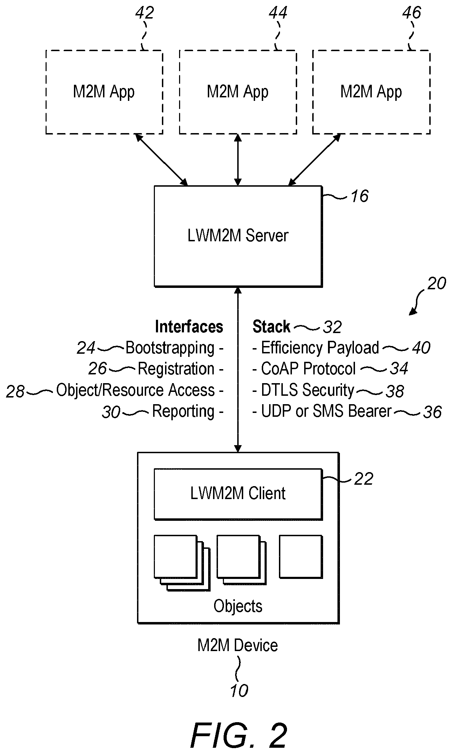

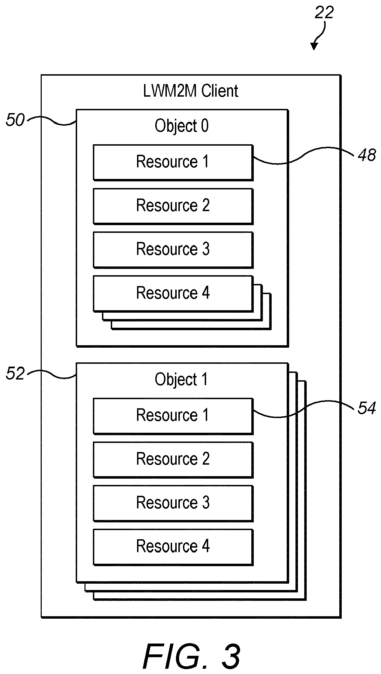

Figures 2 and 3 show the LwM2M architecture 20 which technically defines the application layer communication protocol for use between a client 22 on the M2M remote device 10 and server software on a LwM2M server 16. The client and server identified in figures 1, 2 and 3 may comprise software operating at a client device and a server computing system respectively. In other words the terms "client" and "server" denote the algorithms operating at a respective device or computing system. A client device may comprise a computing system. A computing system as referred to in this disclosure may comprise memory, for example both volatile and non-volatile memory, a processor programmed to implement any of the methods described here, input and output devices and optionally a user interface, as is known in the art.

The client 22 of figure 2 resides on the device 10 and is integrated as a software library or a built-in function of a module or device 10. The server 16 may be located in a private or public data center and can be hosted by the M2M Service Provider, Network Service Provider or Application Service Provider.

As shown in figure 2, four logical interfaces are defined between the server and client, namely bootstrapping 24, being pre-provisioned or client/server initiated; registration 26 to register a client 22 and its objects 50; object/resource access or device management 28 to enable server 16 access to an object 50 or resource 48; and information reporting 30 for notifications with new resource 48 values. A LwM2M server may initiate an observation request for changes of a specific resource, resources within an object instance or for all the object instances of an object within a LwM2M client. The LwM2M client then replies with a series of notifications. The observation and notification mechanism used in LwM2M communications is defined in IETF standard RFC 7641 and updated in RFC8323. However the methods and apparatus described here are not limited to the use of these standards.

The LWM2M protocol stack 32 uses the Constrained Application Protocol (CoAP) 34 as the underlying transfer protocol over any suitable bearer 36 such as User Datagram Protocol (UDP), Transmission Control Protocol (TCP) and Short Message Server (SMS). The CoAP protocol 34 defines the message header, request/response codes, message options and retransmission mechanisms. The CoAP protocol 34 is an alternative to HTTP for Representational State Transfer (RESTful) Application Programming Interfaces (APIs) on resource-constrained devices 10 and supports the methods of GET, POST, PUT, DELETE, which can be mapped to those of HTTP. Unlike HTTP, CoAP messages are exchanged asynchronously between CoAP end-points over a datagram-oriented transport such as UDP. CoAP messages are encoded in a binary format allowing functionality to start with a 4-byte overhead. LWM2M defines the UDP Binding with CoAP as mandatory whereas the SMS Binding with CoAP is optional, which in effect means that LWM2M client 22 to server 16 interaction may occur both via SMS and UDP 36.

The LWM2M architecture 20 uses security protocols to secure communications between client 22 and server 16 using a Datagram Transport Layer Security (DTLS) 38. DTLS 38 is used to provide a secure channel between the LWM2M server 16 and the LWM2M client 22 for all efficient payloads 40. The efficient payloads 40 can be plain text for individual resources and Binary TLV or JSON for resource batches (Object or Resource Arrays). DTLS 38 security modes include both pre-shared key and public key technology to support embedded devices 10.

M2M application 42 developers can manage the devices 10 remotely through a M2M web application 44 and a M2M device management application 46.

A LwM2M client typically comprises software running on an loT device implementing the LwM2M protocol for interaction with an LwM2M server and an LwM2M Bootstrap server. However the term "client" as used herein to denote software is not limited in this way and may comprise software operable on an loT device for interaction with any LwM2M compliant server, including but not limited to an application server and a device management server. A LwM2M server typically comprises software implementing the server-side functionality of the LwM2M protocol for interaction with a LwM2M client. Typically, the LwM2M server software is running on a non-loT device, such as an on-premise server or in a public or cloud-based infrastructure.

The LwM2M protocol accesses data on a device whereby the data itself is structured in a hierarchy. Each client device may have one or more "resources" associated with it, defined in the LwM2M standard. The term "resource" may refer to any variable or parameter associated with the client device that has a value that may be reported to the server. Resources may be grouped into "objects" also defined in the LwM2M standard. An object may comprise resources having a similar origin. For example a sensor object may include a plurality of resources detectable by one or more sensors including but not limited to temperature, humidity, pressure, force. A system object may include system related resources such as memory usage, transmission success (positive or negative), alert generated (positive or negative). Resources may be grouped into objects in any way and the grouping is not limited to these examples. A device can potentially host multiple instances of the same object type. For example, if the object is "sensor", different sensor object instances may relate to different sensors such as temperature sensor, voltage sensor and other sensors. Similarly, resources may also occur in multiple instances.

Referring to Figure 3, the client 22 illustrated in Figure 2 is shown in more detail. Each piece of information made available by the LWM2M client 22 is a Resource 48. A Resource 48 may be considered to be a piece of information that can be read, written or executed and is accessed with URIs: /{Object ID}/{Object Instance]/[Resource ID}, for example /3/0/1 (Device Object, Manufacturer Resource).

The Resources 48 are further logically organized into Objects 50. Each LWM2M client 22 can have any number of Resources 48, each of which belongs to an Object 50. For example, a Firmware Object 52 may contain all the Resources 54 used for firmware update purposes.

Although not shown in Figure 3, a set of objects for device management purposes may include:
- Security object to handle security aspects between management servers 16 and the client 22 on the device 10;
- Server object to define data and functions related to the management server 16;
- Access control object to define for each of several permitted management servers 16 the access rights the servers 16 have for each data object on the client 22;
- Device object to detail resources on the M2M device 10 related to device 10 specific information;
- Location object to group those resources that provide information about the current location of the M2M device 10;
- Connectivity object to group together resources on the M2M device 10 that assist in monitoring the status of a network connection; and
- Statistics object to group together resources on the M2M device 10 that hold statistical information about an existing network connection.

As an example, a device object may allow remote retrieval of device information such as manufacturer, model, power information, free memory and error information. Furthermore the device object may provide a resource for initiation of a remote reboot or factory reset.

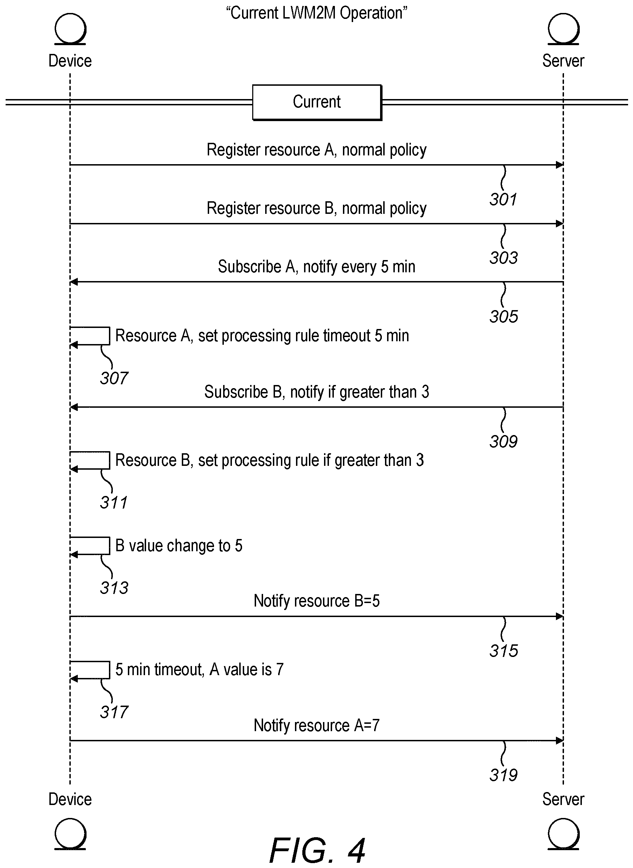

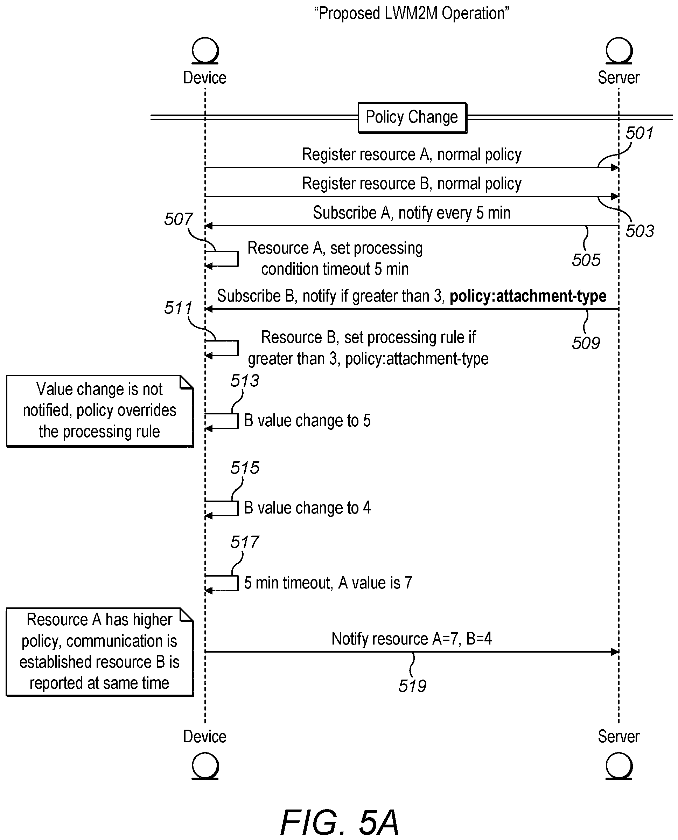

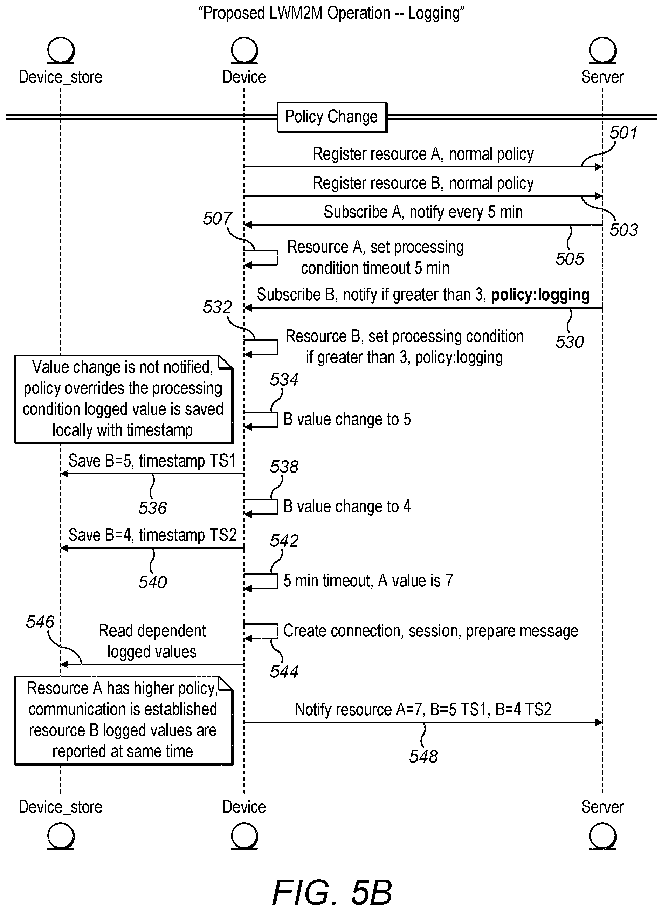

Some specific embodiments of methods using communication policies will now be described with reference to figures 4 and 5. These figures show particular embodiments in which a server subscribes to certain resources at a client device in order for data relating to the resources, for example values of the resources, to be reported to, or notified to, the server by the client device. According to some embodiments, analogous methods to those shown in figures 4 and 5 may be used for the notification of other data relating to objects or object instances at a client device from the client device to the server.

Figure 4 shows an example of a message flow that may take place between a client device and a server, for example M2M device 10 and LWM2M server 16 of figure 2. It should be noted that each arrow between the client device and the server as shown in any of the figures may comprise a single message or a plurality of messages unless otherwise stated.

A device such as device 10, or more precisely a client application implemented on a client device, may register one or more resources to the server, as indicated by message flows 301 and 303 where resources A and B are registered at the server. This may be part of a process initiated at the client or the server, by which the client device, or client application or client resources, are registered to the server, whereby the client device, or client application, or client resources, are discovered by the server. The client device may indicate to the server a policy associated with each resource. The policy may specify when data is to be reported from the client device to the server and may be termed a "communication policy". Initially this may be a default policy which may be the same or different from one resource to another. A policy corresponding to a resource may be notified to the server as part of the initial registration message, as indicated in messages 301 and 303 where the policy corresponding to each of resources A and B is "normal", which may be a default policy to be applied in the absence of any different policy being specified. Alternatively, policies can be notified in separate messages after initial registration and discovery of resources. In methods and apparatus according to some embodiments a client device, or any application implemented at a client device, may have no policy associated with a resource until this is notified to the client device by the server. In methods according to some embodiments, a default policy for data relating to a resource, object or object instance may be predetermined and stored by the client and/or the server, and may be capable of being overridden on instruction from the server to the client or vice versa, for example through the exchange of messages between the client and the server. Several different policies may be available to be specified for implementation for objects, object instances or resources. These may be categorised as different policy types, for example dependent or independent, as described further here.

The server, having discovered resources at the client device, may then subscribe to one or more of those discovered resources. This may be performed by the server sending an observation request to the client, indicated for example by message flow 305. As a result, the server may "subscribe" to a resource at the client. The observation request may include a condition relating to the reporting of resource values from the client to the server. In the example shown in figure 3, the server requests to be notified of the value of resource A every 5 minutes. Arrow 307 in figure 3 indicates the client device configuring the 5 minute condition in order to fulfil the observation request. According to the LwM2M standard, the condition may associated with a resource as part of <NOTIFICATION> Class Attributes.

The server may send observation requests relating to different resources with different conditions. Thus figure 4 shows at 309 the server sending to the client device an observation request to be notified of the value of a second resource B according to a different condition, namely in this example each time the value of resource B crosses a threshold value of 3, and at 311 the client device configuring the condition. In this embodiment, according to the "normal" policy applicable to both resources A and B, values of those resources are reported from the client device to the server according to those conditions.

At 313 the value of resource B at the device has risen to 5 and therefore this is reported to the server as indicated by message flow 315.

At 317 a timer for resource A has timed out and therefore at 319 the value of resource A is reported to the server, and the timer is re-started.

It should be noted that several applications may be implemented in a client device. For example, a client device may implement two or more different applications in order for different server subscriptions to be implemented, for example subscriptions to different resources.

In addition to the message flows shown in figure 4, a client device may notify to a server which ones of a plurality of different communication policies it is able to support. It is possible that due to memory constraints, reporting data quotas, network restrictions or other constraints that a client device may not be able to support all of the communication policies described here. Therefore a client device may notify to a server which communication policies it can support, for example at initial registration of the client device to the server and this may be updated from time to time. The server should not then request the client device to implement a policy that it cannot support.

Figure 5A shows an example of a message flow that may take place between a client device and a server, for example M2M device 10 and LWM2M server 16 of figure 2, according to some embodiments. Message flows 501, 503, 505 and 507 may be identical to or similar to message flows 301, 303, 305 and 307 of figure 4.

Message flow 509 is a modified or different message flow, as compared to message flow 309 of figure 4, specifying a policy for resource B according to some embodiments. In the embodiment shown in figure 5A, this policy will override the "normal" policy notified to the server by the client device in message flow 503, and therefore override the "notify if greater than 3" condition. Thus, message flow 509 specifies a processing condition "notify if greater than 3" similarly to message flow 309, and additionally specifies a policy "attachment. The "attachment" policy may be regarded as an additional condition applicable to the reporting of values of resource B. According to some embodiments, more than one message may be comprised in message flow 509 to convey to the client device the identity of the resource, an associated condition, and any policy other than "normal" to be applied to the resource subscription.

At 511, similarly to flow 311, some internal processing may take place at the client device in order to set the condition "notify if greater than 3", and further internal processing may take place in order to set the new "attachment" policy.

In methods according to some embodiments, no policy may be associated with a resource until notified at some time after registration and discovery. Therefore there may be no policy to be replaced by the "attachment" policy specified in message flow 509.

According to the "attachment" policy, data to which that policy applies is reported from the client device to the server only if other data is to be reported from the client device to the server. In other words, the reporting of data is dependent on other data being transmitted from the client device to the server. This is in contrast to the normal policy according to which the transmission of data does not depend on whether other data is to be transmitted and which may therefore be termed independent. The data to which a dependent policy applies may be transmitted as part of the same message, or message flow, as the other data, hence the term "attachment". Alternatively it may be transmitted in a separate message or message flow after a radio link has been established for the transmission of the other data. Other policies may additionally or alternatively be defined for the reporting of data from the client device to the server, some or all of which may impose conditions on the reporting of data.

The use of different communication policies, for example with one being dependent on another, or any other, may be particularly useful for the reporting of ancillary data to that for which a client device is primarily intended, and may therefore extend the usefulness of the client device to the server or to a communication network. For example, a server may subscribe primarily to physical environmental data such as temperature and humidity, but may request a client device to report additional data at the same time through the use of a dependent communication policy for the additional data. The additional data might relate to the networking environment and might be collected by the server for onward transmission to another server, for example with no processing. In other words, the data reported by the client device may not be bound for the same server. In another scenario, the network data might be of primary interest and any available physical environmental data might be ancillary data to be reported by the client device at the same time. The use of a dependent communication policy may be used to enable a server to collect data on behalf of a third party server.

The use of different communication policies, for example with one being dependent on another, or any other, may also be useful to modify an initial communication agreement between client and server.

In the particular embodiment shown in figure 5A, two different communication policies are specified for two different resources, "normal" for resource A and "attachment" for resource B. More generally, according to some embodiments, different communication policies may be specified for different ones of objects, object instances or resources at a client device for the reporting of data relating to the objects, object instances or resources to the server.

The client device may internally process values of resources for possible reporting to the server. This may include determining the values of resources at regular intervals. In the case of resource A the interval may be 5 minutes as specified by the condition set at 507. In the case of resource B, this may be more or less frequent. In the embodiment illustrated in figure 5A, the value of resource B is determined more frequently than every 5 minutes. At 513 it is determined at the client device that the value of B is 5, i.e. greater than the threshold value 3 according to the subscription condition for resource B, but this is not reported to the server according to the policy for resource B. Later at 515 the value of resource B is found to be 5 and this is not immediately reported to the server. Events 513 and 515 take place during the 5 minute interval operating in relation to resource A.

After the expiry of 5 minutes, at 517 the value of A is determined and is to be reported to the server according to the "normal" policy. At this point in time data may be reported according to the "attachment" communication policy. Therefore the values of A and B are reported to the server in message flow 519. Message flow 519 may include the creation of a connection between the device and the server and the establishment of a communication session. This is an example where the "other data" to be sent from the client device to the server is the value of resource A. When the value of resource A is to be sent, then the value of resource B is sent also. The other data is reported from the client to the server by implementation of a different, in this case normal, communication policy for resource A from the "attachment" communication policy applicable for resource B. According to the "attachment" communication policy in the embodiment of figure 5A, data relating to at least one of the objects, object instances or resources, in this case resource B, is reported from the client device to the server in response to the fulfilment of a condition, 5 minute timeout, for the client device to report the other data, the value of A, to the server.

In the embodiment of figure 5A the reporting of values of A takes priority over the reporting of values of B since no "attachment" policy applies to resource A. It may therefore be considered that resource A has a "higher" policy than resource B. A policy is "higher" than another if it does not require the other to be operational in order for data to be transmitted to the server.

In the embodiment of figure 5A, the current values of A and B are reported at message flow 519, in the same message or in separate messages, to the server.

Figure 5A illustrates a simple example in which only two resources are subscribed to by the server. The attachment policy may be configured such that values of resource B are reported to the server along with values of any other resource to be reported to the server. The server may for example have subscriptions to two or more resources with different time out conditions. Every timer timeout may represent an opportunity for the value, or stored values, of B to be reported if the value of B has exceeded 3. Additionally or alternatively, the server may have subscriptions to one or more other resources with a notification condition such as a "notify if greater than/smaller than/changed more than" condition, operating according to a "normal" policy. Therefore one or more values of B may be reported to the server at any time that the value of another resource has met the notification condition, if the value of B has met the reporting condition for B which is "notify if greater than 3" in the example of figure 5A.

It will be appreciated that this reporting of values of resource B only when other data is to be sent from the client to the server, in the figure 5A example the value of resource A, reduces the number of times needed to initiate communication, for example to establish a radio link, between the client device and the server.

According to some embodiments, additional values of A and/or B, determined between instances of the timer timing out, may be reported as part of message flow 519. For example, values of B determined during smaller intervals than the 5 minute condition applied to resource B, may be stored and reported to the server at message flow 519. More generally, a method according to some embodiments may comprise recording at the client device data relating to at least one of the objects, object instances or resources at predetermined times and reporting the recorded data to the server only if other data is to be reported from the client device to the server. This may create timestamped data that is occasionally transmitted from the client to the server.

According to some embodiments, a requirement that intermediate stored data, such as multiple resource values, is reported to the server when other data is to be reported from a client device to a server may be defined in an "attachment" policy. According to other embodiments, a different policy from the "attachment" policy may be defined for the reporting of previously recorded data from a client device to a server. This is termed here a "logging" policy.

A logging policy may be defined such that data is collected at intervals, for example periodically, but only communicated when a higher policy data causes the device to initiate communication with the server. As such a logging policy may be considered to be an additional dependent communication policy. Implementation of this policy may create a timestamp series of values that are occasionally transmitted from the client to the server.

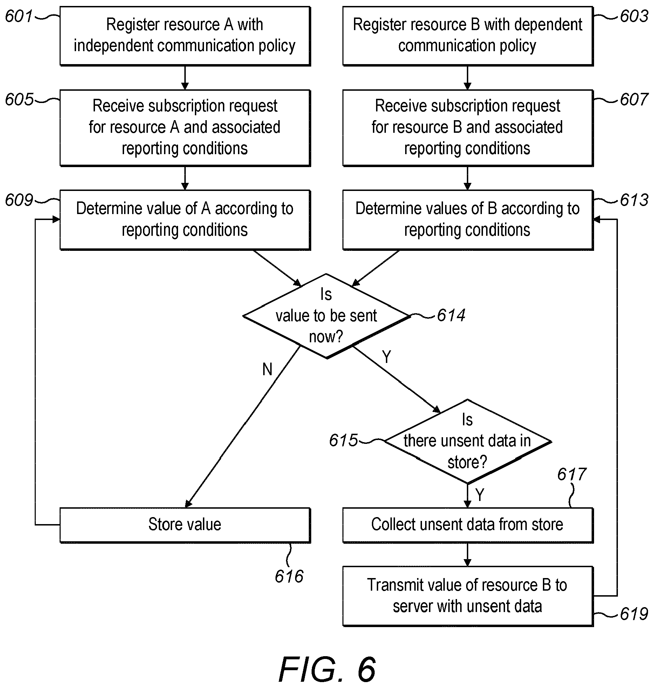

Figure 5B shows an example of a message flow that may take place between a client device and a server, for example M2M device 10 and LWM2M server 16 of figure 2, according to some embodiments. In addition to a device, figure 5B shows a device store, which may for example comprise volatile and/or non-volatile memory as described with reference to figure 2 and described further with reference to figure 6. Message flows 501, 503, 505 and 507 may be identical to or similar to message flows 301, 303, 305 and 307 of figure 4 or message flows 501, 503, 505 and 507 of figure 5B.

Message flow 530 is a message flow specifying a policy for resource B according to some embodiments. In the embodiment shown in figure 5B, this policy will override the "normal" policy notified to the server by the client device in message flow 503, and therefore override the "notify if greater than 3" condition. Thus, message flow 509 specifies a processing condition "notify if greater than 3" similarly to message flow 309, and additionally specifies a policy "logging". The "logging" policy may be regarded as an additional condition applicable to the reporting of values of resource B. In the embodiment illustrated in figure 5B, instead of every value greater than 3 of resource B being immediately reported to the server, as would be the case for a "normal" or independent policy, those values are logged, for example stored in a device store in either persistent or volatile memory, and transmitted to the server only when other data is to be transmitted to the server.

As with the embodiments of figure 5A, more than one message may be comprised in message flow 530 to convey to the client device the identity of the resource, an associated condition, and any policy other than "normal" to be applied to the resource subscription.

At 532 internal processing is performed at the client device to set the logging rule for resource B notified to the client device in message flow 530.

At 534 it is determined at the client device that the value of B is 5, i.e. greater than the threshold value 3 according to the subscription condition for resource B, but this is not reported to the server according to the policy for resource B. Instead, at operation 536 the value 5 of resource B is saved to memory at the client device. With any of the logging policies described here, data may be recorded with a timestamp, for example as indicated in operation 566. A timestamp may be an absolute time or a relative time. In the case of a relative time it may not be necessary for it to be included with the data at operation 236. Later at operation 538 the value of resource B is found to be 5 and this is not immediately reported to the server but is saved to the device store at operation 540. Events 534 and 538 take place during the 5 minute interval operating in relation to resource A.

At operation 542 the timer associated with resource A has timed out and the value of resource A is to be transmitted to the server according to the normal, or independent, policy being implemented in connection with resource A. At operation 544, a connection, e.g. radio connection, is created between the device and the server, if not already created, a communication session is established and one or more messages are prepared to be transmitted from the device to the server. At operation 546, logged values of resource B are retrieved or read from the device store, which have been logged according to the logging policy which is dependent for transmission on other data being transmitted from the device to the server. At operation 548 the logged values of resource B are transmitted to the server, optionally with a timestamp "TS" for each value, along with the current value of resource A. The values may be transmitted in one message or in multiple messages, provided that according to the dependent policy data is not transmitted unless other data is to transmitted from the device to the server.

One or more conditions may be associated with a logging policy, for example to override a transmission condition such as transmission only if other data is to be reported from the client device to the server. An override condition may for example be that a data value is outside threshold upper or lower values or has changed by more than a predetermined amount.

According to some embodiments, different logging policies may be defined. For example, one or more separate "logging-conditional" policies may be defined in addition to a "logging" policy which has no override condition and for which data is only transmitted when a higher policy for other data is implemented. A logging-conditional policy may take effect such that if a data value falls outside predetermined thresholds or changes by a predetermined amount, this is reported immediately. For example, using the LwM2M protocol, if a resource value or change exceeds predetermined attributes for greater than, less than or step, the resource value or change may be reported immediately. Changes not triggering the greater than, less than or step may be reported only when higher policy makes requires a client device to initiate communication with the server. Whether operating according to LwM2M or not, different logging-conditional policies with different conditions may be defined.

Communication initiation consumes power, and communication transactions can incur data transmission costs. With the proposed use of different policies described here, devices can be better configured to collect data that optimizes the communication power and monetary costs. For monetary savings, the data collected may be sent in one transaction along with other, for example more critical, data. This kind of operation is supported by the SenML standard, referred to in the LwM2M standard. Radio communication initiation can be costly, and once a communication is initialized there is relatively little cost if additional data is sent.

It will be appreciated from the foregoing that one of the communication policies may be an independent communication policy according to which a communication session with the server for reporting the current value of the resource is established in response to predetermined conditions relating to the object, object instance or resource to which the communication policy applies, also referred to here as "normal". Such a policy may be independent in the sense that it does not rely on other data relating to an object, object instance or resource to be transmitted to the server. This does not preclude the possibility that other data relating to the object, object instance or resource may be transmitted together with data being transmitted according to a normal or independent communication policy. In other words data being transmitted independently may be accompanied by data being transmitted dependently.

It is possible in loT networks, for example a narrow band internet of things "NB-loT" cellular network compliant with standard TS23.682 or other loT network, that certain kinds of data may be allowed or required to be transmitted despite network restrictions. For example a network may signal overload and/or require communication avoidance by devices communicating over the network, or a device may have a communication quota which has been exceeded. Some kinds of data may be designated as being critical, or exceptional, whereby it may be transmitted in spite of such conditions prevailing or restrictions being imposed. An example of exceptional data is 3GPP TS 23.682 Rate Control Exception Data.

According to some embodiments, critical or exceptional data can be accommodated through the use of a policy as described here. An additional policy may be defined for data which is to be transmitted despite network conditions that would otherwise prevent the data being reported from the client device to the server. Thus the use of policies may provide an efficient way of ensuring that exceptional or critical data is transmitted from a client device to a server. Therefore the plurality of different communication policies described here may include a communication policy according to which data is reported from the client device to the server irrespective of at least one restriction on communication between the network and the server. Such a policy would be an independent communication policy, and may be different from the normal policy in overriding one or more communication restrictions.

It will be appreciated that different policies may apply to different kinds of data. Different kinds of data may differ in various ways including but not limited to: data relating to different objects, data relating to different object instances, and values of different resources at the same or different objects.

Embodiments of methods and apparatus disclosed here implement one of a plurality of different communication policies for at least two different ones of objects, object instances and resources at a client device. The policies may include any two or more of the following types, and others not specified here that will be apparent to those skilled in the art:
- Normal - sending of data relating to one of the objects, object instances and resources does not rely on data to be sent from any other of the objects, object instances and resources - also referred to as "independent"
- Attachment (with or without logging) - also referred to as "dependent"
- Logging (if attachment does not require/allow logging) - a further or second dependent policy
- Logging-conditional (possibly different policies with different conditions) - a conditional dependent policy
- Critical - a different kind of independent communication policy.

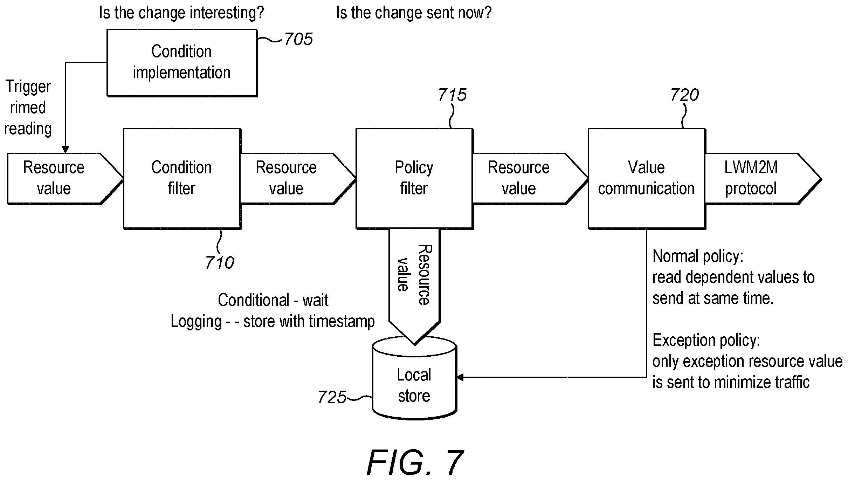

In general embodiments of methods described here may comprise receiving respective subscription requests for data relating to the at least two different ones of objects, object instances or resources at the client device, wherein at least one of the subscription requests includes at least one condition for the determining of the data. The determined data may then be filtered according to whether the communication policy for that data is dependent. If the communication policy for the data is dependent, the determined data may be stored in a data store. If the data is independent, a method may comprise determining whether the data store contains data that has not been transmitted to the server. The data for which the communication policy is independent is transmitted, and if the data store contains data that has not been transmitted to the server also transmits at least one item of data from the store that has not been transmitted to the server. Some specific embodiments will now be described with reference to figures 6 and 7.

Figure 6 is a flow chart showing a method according to some embodiments which may be implemented in a client device. In the embodiment shown in figure 6, only two flows are shown for simplicity, operating in parallel for respective resources. In practice a larger number of flows may operate in parallel for any number of resources, object instances or objects.

The first illustrated operation 601 is the registration of resource A with the server with an independent, e.g. normal, communication policy, for example as described with reference to figure 4, figure 5A or figure 5B. At operation 603 a second resource is registered with a dependent communication policy. This may be achieved in several different ways. For example it may be achieved in multiple stages as shown in figure 5A for example where the server instructs the client to implement the dependent communication policy "attachment" at message flow 509 following initial registration of a resource at operation 503. Alternatively this may be achieved by different resources being registered by a client device at the server with different communication policies, either at initial registration or as a result of a change in policy during operation, for example to conserve memory capacity or as a result of network conditions or other circumstances, some examples of which are mentioned elsewhere herein. Following operations 601 and 602 a client device may be configured to implement one of a plurality of different communication policies for at least two different ones of objects, object instances or resources at the client device, in this example two different resources.

At operations 605 and 607 in figure 6, the client device receives subscription requests for resources A and B, and associated reporting conditions such as "notify every 5 minutes" for resource A and "notify if greater than 3" for resource B. These may be in the same message or in separate messages as shown in figures 5A and 5B. The reporting conditions may be received at the client device at the same time as the subscription request(s) or in separate messages, for example if a reporting condition is to be changed at the instigation of the client device or the server.

At operation 609 values of resource A are determined according to the reporting conditions for resource A, for example every 5 minutes in the examples of figure 5A and 5B. Then, since the communication policy for resource A is independent, at operation 611 each recorded value of resource A is transmitted to the server at operation 611 and the next value of resource A is recorded at operation 609.

At operation 613 values of resource B are determined according to the reporting condition for resource B. Each time a value is determined, at operation 614 a decision is made whether the value is to be reported according to the communication policy applicable to the data. Operation 614 may be implemented as a filter, explained further with reference to figure 7, for all data being determined at the client device.

If the result of decision 614 is negative, because the applicable policy for the data is dependent, the determined value is stored for later transmission at operation 616 and values of A continue to be determined at operation 609. If the result of decision 614 is positive, the data store is then examined at operation 615 to determine whether any unsent data is present, and if so it collected from or read from the store at operation 617. Then the data for which the communication policy is independent is transmitted to the server at operation 619, together with data from the store, following which the determination of values of B continues at operation 613. According to the flow shown in figure 6, only if another reporting condition is fulfilled is the value of resource B reported to the server in operation 617. Previously recorded values of resource B may also be reported if the communication policy for resource B is a logging policy.

It should be noted that the reporting conditions may be the same for resources A and B, and may be synchronised. The flow for resource B or any operation of a dependent communication policy may be agnostic to any other reporting conditions being implemented. Thus it is possible according to some embodiments that values of two resources may coincidentally be reported in synchronisation although one is reported according to a dependent communication policy.

An analogous method to that shown in figure 6 may be used to implement one of a plurality of different communication policies for at least two different ones of objects, object instances or resources at the client device. The methods described here are not limited to different communication policies from one resource to another and may encompass different communication polies between any of objects, object instances or resources, for example but not limited to a resource and an object instance or an object and an object instance.

A logical model of an algorithm, which may be used to implement an embodiment of a method as described in this disclosure, will now be described with reference to figure 7. The logical model may be implemented at a client device and is shown to comprise a series of software modules comprising condition implementation module 705, filters 710, 715, communication module 720 and a local store or memory 725, which may comprise volatile and/or non-volatile memory. The model of figure 7 is an example implementation of methods according to the invention, alternative to figure 6 although similar operations are performed in the model of figure 7 and the flowchart of figure 6.

The condition implementation module may be configured to receive conditions applicable to the reporting of data, according to subscription requests illustrated by way of example at operations 305, 309, 505, 509. Timed reading of the data, e.g. resource values, is then triggered. The timing could be according to the subscription conditions, such as "notify every 5 minutes" or could be at a default frequency unless otherwise specified, for example in the case of "notify if greater than 5".

In the model shown in figure 7 data, for example a resource value, is supplied to a condition filter 710 at the frequency of the timed readings. For example the condition filter may implement operations 609 and 613, and optionally parallel operations for any number of kinds of data, e.g. resource values. The condition filter may be used to implement reporting conditions for data, such as "notify every 5 minutes" for resource A and "notify if greater than 3" for resource B as shown by way of example in figures 5A and 5B. Thus the condition filter may implement one or more timers. The condition filter may implement any number of different reporting conditions for different kinds of data. It will be appreciated that the condition filter may be implemented as a set of filters, for example operating in parallel. The condition filter 710 will implement a decision whether a reporting condition for data, e.g. a resource value, is met, and if so the data, e.g. resource value, will be passed to a policy filter 715.

The policy filter 715 will determine whether or not the data is to be reported to the server immediately, according to the policy to be implemented for that data. Thus for example the policy filter may implement the decision 614 of figure 6. If a dependent communication policy is being implemented for that data, the data e.g. resource value, is stored at the store 725, for example according to operation 616. If an attachment policy, of the kind described with reference to figure 5A, is being implemented for the data, a previously stored data value such as an earlier value of resource A may be overwritten in the store 725. If a logging policy is being implemented for the data, for example as described with reference to figure 5B, a series of data values may be stored in the store 725, for example each with an associated timestamp.

If an independent policy is being implemented for data received at the policy filter 715, the data is transmitted to value communication logic 720. Such data may also be stored at the store 725. The value communication logic 720 will transmit the data to the server, for example according to the LwM2M protocol, in an operation analogous to operation 619 of figure 3. The value communication logic is configured to, after receiving data to be transmitted from the policy filter 715, retrieve from the store 725 data that has not already been transmitted to the server and transmit the retrieved data to the server. This retrieval, also shown as operation 617 in figure 6 may take place before or after the transmission of data according to the independent communication policy but while the radio link or communication session for the independent communication is still available or "alive", so as to avoid the need to reestablish a radio link or communication session.

The filters 710 and 715 may be considered to implement two decisions, the condition filter determining whether the received data is of interest to the server, for example as a result of a change in value of the data, and the policy filter 715 determining whether the transmission of data previously determined to be of interest is to take place now or when other data is to be transmitted.

The value communication logic can further control the transmission of data to be sent from the client device to the server. According to a "normal" policy, all dependent data, for example values to be transmitted when other data is to be transmitted, is read from the store 715 and transmitted to the server with the independently reported data. If it is necessary to minimise traffic on the network, which may be notified to a client device 10 either via the server 216 or from elsewhere in the network only data to which a "critical" policy is implemented is transmitted. In this way despite network restrictions, data determined to be critical or exceptional is transmitted.

In loT and other kinds of communication, certain data may need to be sent reliably, for example requiring an acknowledgement. This may be accommodated by indicating in a policy definition that data needs to be sent reliably, or by the provision of different policies or definition of new attributes. Thus for each policy described here, a "reliable" indicator may be provided or at least two alternative policies may be provided with different reliability levels. Where data is required to be sent reliably, it may be resent if no acknowledgement has been received after a predetermined time. For example for attachment, or logging, it may not be critical if data is lost. For logging-conditional, where the sending of data is triggered by the condition, it may be required that delivery is confirmed since the wait for acknowledgement and possible resends may be warranted by the nature of the data.

According to some embodiments, a restriction on the amount of data to be transmitted is imposed on at least one of the plurality of different communication policies. Then, when the restricted amount of data has been transmitted, a different communication policy may be implemented. The restriction may apply to the device or to a particular one or group of the objects, object instances or resources at the client device. The implementation of the different communication policy may be implemented by instruction from the server to the client or by the client notifying the server that a different policy will be implemented. For example, a restriction may apply to an independent communication policy or a conditional-dependent communication policy, and that policy may be replaced by a dependent communication policy when the restricted amount of data has been transmitted.

For example an application developer can limit the kind or amount of data that is allowed at normal priority. This enforces their control of costs and allows a device manufacturer to enable data collections from the device with fine-tuned configuration and still respecting the main business operation of the device. Attachment and logging data can be for example device health/debug information like memory consumption, MCU sleep time and similar, that is collected to improve software operation. Alternatively security related data (such as communication attempts to different addresses) may be collected with logging-conditional priority.

The LwM2M standard assumes that servers advertise the resources that they have, for example as described in chapter 6.2.1 in the LwM2M Core specification. It would be beneficial to extend that format to include the policy applied by a device to the resource at the time of reporting. This way services or system administrators would be more readily able to find the resources and the policy and change them if needed. Therefore according to some embodiments, the reporting of data from the client device to the server may notify the server of the policy applied to the data.

According to any of the embodiments described here, a client device may retain a policy notified to it by the server, for example as shown in message flow 509, for future use. A client device may store policies applicable to different kinds of data, for example values of different resources, in persistent memory such as flash memory. When a new policy is notified to a client device this may be overwritten in the persistent memory. Alternatively a policy may be used for a limited amount of time or only for communication with a particular server or server group, in which case it may be stored in volatile memory such as random access memory "RAM".

According to any of the embodiments, one communication policy used for data relating to any of the objects, object instances or resources at a client device may be replaced by another policy. Thus an initial or basic communication agreement between client and server may be modified through the use of policies as described here. Suppose for example that a server subscribes to network data using a dependent policy such as "attachment", so that network data is reported to the server only with other resource data such as temperature values. It may transpire that the temperature does not change sufficiently often to generate sufficient network data, in which case an independent communication policy such as "normal" may replace the dependent policy for the network data. Thus, in any of the embodiments, a communication policy may be changed, for example a dependent communication policy may be replaced by an independent policy, if the frequency of data reporting for that policy falls below a predetermined threshold. Similarly if a client device is reporting data too frequently, an independent communication policy may be replaced by a dependent communication policy for that data. Additionally or alternatively, one policy may be replaced by another as a result of changing interest in the data or the resource, object or object instance to which the data relates, for example a change in interest by a system or server or subscription administrator. Other conditions may result in one policy being replaced by another.

According to some embodiments, communication policies as described here may be used to determine the relative importance of data for storage in persistent or volatile memory, for example logging of events such as a value being outside predetermined limits or changing by more than a predetermined amount. The different communication policies indicate a data hierarchy. From this it may be inferred that data being reported independently is more important than other data and may overwrite other data in the event of lack of space. Therefore, any of the methods described here may comprise controlling the storage of data at the client device according to the specified communication policies for the data. This may comprise prioritising the storage of data according to an independent communication policy over data reported according to a dependent communication policy. The prioritising may comprise one or both of storing data values in persistent memory in preference to volatile memory and overwriting when memory space is full.

Event log is a new resource standard in LWM2M. Log storage consumes device resources (power and flash space, and flash wearing). According to some embodiments, for storage purposes, the communication policy may be included with data which is stored and used to prioritise the storage of data when storage space is limited. Additionally the higher priority data, e.g. data for which the communication policy is independent, can override the lower priority data for which the communication policy is dependent. For example "attachment" data may be only saved as one value in RAM only. Logging may have multiple timestamped values in RAM. Logging-conditional may be treated as higher priority data and saved to flash if the condition for independent transmission is met, and anything above is saved to flash. Higher priority (policy) data may overwrite lower priority data if there is lack of space in RAM or flash.

Therefore embodiments of any of the methods described here may comprise controlling the storage of data at the client device according to the specified communication policies for the data. The storage of data according to an independent communication policy may be prioritised over data reported according to a dependent communication policy. The prioritising may comprise one or both of storing data values in persistent memory in preference to volatile memory and overwriting when memory space is full.

The methods described here include a series of steps, message flows or operations. Unless otherwise stated it is not required that these are performed in the order described or illustrated and in some embodiments the order of steps, message flows or operations may be rearranged.

It will be appreciated that any of the methods described herein may be implemented by suitable programming of a processor in a computing system, server or loT device. Therefore there is disclosed here a transitory or non-transitory computer readable medium or data carrier carrying code which, when implemented on a processor, causes the processor to implement any of the methods described here.

Some embodiments of methods described here may be implemented in a client device. Therefore some embodiments provide a client device, or a computing system configured as a client device, configured to implement any of the methods described here.

It should be noted that embodiments of the apparatus, computer readable media and methods disclosed here do not require direct communication between a client and server. Any number of intermediate communication nodes may be present in a communication path between client and server. Further, an observation request may identify one or more resources of which a value is to be reported either back to the server sending the observation request or to another server or entity.

Those skilled in the art will appreciate that while the foregoing has described what is considered to be the best mode and where appropriate other modes of performing or implementing the present techniques, the present techniques should not be limited to the specific configurations and methods disclosed in this description of the preferred embodiment. Those skilled in the art will recognize that present techniques have a broad range of applications, and that the embodiments may take a wide range of modifications without departing from the any inventive concept as defined in the appended claims.

The invention is further defined by the following clauses:
1. A method of communication between at least one client device and a server for reporting of data from the client device to the server,
   the method comprising implementing one of a plurality of different communication policies for at least two different ones of objects, object instances or resources at the client device,
   wherein the plurality of communication policies includes a dependent communication policy according to which data relating to at least one of the objects, object instances or resources is reported from the client device to the server only if other data is to be reported from the client device to the server.
2. The method of clause 1 wherein the other data relates to another one of the objects, object instances or resources.
3. The method of clause 1 or clause 2 wherein the other data is to be reported from the client to the server by implementation of a different one of the plurality of different communication policies for another one of the at least two objects, object instances or resources at the client device.
4. The method of clause 1, 2 or 3 wherein, according to the dependent communication policy, data relating to at least one of the objects, object instances or resources is reported from the client device to the server in response to the fulfilment of a condition for the client device to report the other data to the server.
5. The method of any preceding clause comprising recording at the client device data relating to at least one of the objects, object instances or resources at predetermined times and reporting the recorded data to the server according to the dependent communication policy.
6. The method of any of clauses 1 to 5 wherein the plurality of communication policies includes an additional dependent communication policy according to which data relating to at least one of the objects, object instances or resources is recorded at the client device at predetermined times and is reported from the client device to the server only if other data is to be reported from the client device to the server.
7. The method of any preceding clause, wherein the plurality of communication policies include a conditional dependent communication policy according to which data relating to at least one of the objects, object instances or resources is reported from the client device to the server only if other data is to be reported from the client device to the server, unless the data fulfils one or more conditions in which case it is reported to the server independently of other data.
8. The method of clause 7 wherein the one or more conditions include the value of a resource exceeding a predetermined value or falling below a predetermined value or changing by more than a predetermined amount.
9. The method of clause 7 or clause 8 wherein according to the conditional dependent communication policy, the client device is required to check that the server has received the data reported independently by the client device.
10. The method of clause 9 wherein the client device resends the independently reported data to the server if no acknowledgement has been received from the server within a predetermined time from sending the data.
11. The method of any preceding clause wherein the plurality of communication policies include an independent communication policy according to which a communication session with the server for reporting the current value of the resource is established in response to predetermined conditions relating to the object, object instance or resource to which the communication policy applies.
12. The method of any preceding clause wherein the plurality of communication policies include a communication policy according to which data is reported from the client device to the server irrespective of at least one restriction on communication between the network and the server.
13. The method of any preceding clause wherein according to the dependent communication policy a value of a first specified resource is reported from the client device to the server only if a value of another resource is to be reported from the client device to the server.
14. The method of any preceding clause comprising a device notifying the server which of the plurality of different communication policies it is able to support.
15. The method of any preceding clause in which a restriction on the amount of data to be transmitted is imposed on at least one of the plurality of different communication policies.
16. The method of clause 15 comprising implementing a different policy in response to the restricted amount of data being transmitted.
17. The method of any preceding clause in which the reporting of data from the client device to the server notifies the server of the policy applied to the data.
18. The method of any preceding clause in which the data reported to the server according to the dependent communication policy is transmitted to another server.
19. The method of any preceding clause comprising implementing a different communication policy for data relating to an object, object instance or resource if the frequency of reporting for that resource is below a threshold frequency.
20. The method of any preceding clause comprising controlling the storage of data at the client device according to the specified communication policies for the data.
21. The method of clause 20 comprising prioritising the storage of data according to an independent communication policy over data reported according to a dependent communication policy.
22. The method of clause 21 wherein the prioritising comprises one or both of storing data values in persistent memory in preference to volatile memory and overwriting when memory space is full.
23. The method of any preceding clause comprising receiving respective subscription requests for data relating to the at least two different ones of objects, object instances or resources at the client device, wherein at least one of the subscription requests includes at least one condition for the determining of the data;
   filtering the determined data according to whether the communication policy for that data is dependent,
   if the communication policy for the data is dependent, storing the determined data in a data store,
   if the data is independent, determining whether the data store contains data that has not been transmitted to the server,
   transmitting the data for which the communication policy is independent, and if the data store contains data that has not been transmitted to the server also transmitting at least one item of data from the store that has not been transmitted to the server.
24. A client device configured to implement the method according to any of clauses 1 to 23.
25. A computer readable medium comprising instructions which, when implemented in a processor in a client device or a server, cause the client device or server to implement the method of any of clauses 1 to 23.

## Claims

1. A method of communication between at least one client device and a server for reporting of data from the client device to the server,
the method comprising implementing one of a plurality of different communication policies for at least two different ones of objects, object instances or resources at the client device,
wherein the plurality of communication policies includes a dependent communication policy according to which data relating to at least one of the objects, object instances or resources is reported from the client device to the server only if other data is to be reported from the client device to the server.

2. The method of claim 1 wherein the other data relates to another one of the objects, object instances or resources; and/or the other data is to be reported from the client to the server by implementation of a different one of the plurality of different communication policies for another one of the at least two objects, object instances or resources at the client device.

3. The method of claim 1 or 2 wherein, according to the dependent communication policy, data relating to at least one of the objects, object instances or resources is reported from the client device to the server in response to the fulfilment of a condition for the client device to report the other data to the server.

4. The method of any preceding claim comprising recording at the client device data relating to at least one of the objects, object instances or resources at predetermined times and reporting the recorded data to the server according to the dependent communication policy.

5. The method of any of claims 1 to 4 wherein the plurality of communication policies includes an additional dependent communication policy according to which data relating to at least one of the objects, object instances or resources is recorded at the client device at predetermined times and is reported from the client device to the server only if other data is to be reported from the client device to the server.

6. The method of any preceding claim, wherein the plurality of communication policies include a conditional dependent communication policy according to which data relating to at least one of the objects, object instances or resources is reported from the client device to the server only if other data is to be reported from the client device to the server, unless the data fulfils one or more conditions in which case it is reported to the server independently of other data, wherein optionally the one or more conditions include the value of a resource exceeding a predetermined value or falling below a predetermined value or changing by more than a predetermined amount.

7. The method of claim 6 wherein according to the conditional dependent communication policy, the client device is required to check that the server has received the data reported independently by the client device, optionally wherein the client device resends the independently reported data to the server if no acknowledgement has been received from the server within a predetermined time from sending the data.

8. The method of any preceding claim wherein the plurality of communication policies include an independent communication policy according to which a communication session with the server for reporting the current value of the resource is established in response to predetermined conditions relating to the object, object instance or resource to which the communication policy applies; and/or the plurality of communication policies include a communication policy according to which data is reported from the client device to the server irrespective of at least one restriction on communication between the network and the server.

9. The method of any preceding claim wherein according to the dependent communication policy a value of a first specified resource is reported from the client device to the server only if a value of another resource is to be reported from the client device to the server.

10. The method of any preceding claim comprising a device notifying the server which of the plurality of different communication policies it is able to support.

11. The method of any preceding claim in which a restriction on the amount of data to be transmitted is imposed on at least one of the plurality of different communication policies, optionally comprising implementing a different policy in response to the restricted amount of data being transmitted.

12. The method of any preceding claim in which the reporting of data from the client device to the server notifies the server of the policy applied to the data; and/or the data reported to the server according to the dependent communication policy is transmitted to another server.

13. The method of any preceding claim comprising any one or more of implementing a different communication policy for data relating to an object, object instance or resource if the frequency of reporting for that resource is below a threshold frequency; controlling the storage of data at the client device according to the specified communication policies for the data; and prioritising the storage of data according to an independent communication policy over data reported according to a dependent communication policy, the prioritising optionally comprising one or both of storing data values in persistent memory in preference to volatile memory and overwriting when memory space is full.

14. The method of any preceding claim comprising receiving respective subscription requests for data relating to the at least two different ones of objects, object instances or resources at the client device, wherein at least one of the subscription requests includes at least one condition for the determining of the data;
filtering the determined data according to whether the communication policy for that data is dependent,
if the communication policy for the data is dependent, storing the determined data in a data store,
if the data is independent, determining whether the data store contains data that has not been transmitted to the server,
transmitting the data for which the communication policy is independent, and if the data store contains data that has not been transmitted to the server also transmitting at least one item of data from the store that has not been transmitted to the server.

15. A client device configured to implement the method according to any of claims 1 to 14, or a computer readable medium comprising instructions which, when implemented in a processor in a client device or a server, cause the client device or server to implement the method of any of claims 1 to 14.
